(19) Europäisches Patentamt
European Patent Office
Office européen des brevets

(11) Numéro de publication: 0 402 274 A1

# (12) DEMANDE DE BREVET EUROPEEN

(21) Numéro de dépôt: 90420238.9

(22) Date de dépôt: 17.05.90

(51) Int. Cl.5: C08L 83/06, C08L 83/07, C09D 183/06

(30) Priorité: 02.06.89 FR 8907566

(43) Date de publication de la demande: 12.12.90 Bulletin 90/50

(84) Etats contractants désignés: AT BE CH DE DK ES FR GB GR IT LI LU NL SE

(71) Demandeur: RHONE-POULENC CHIMIE
25, quai Paul Doumer
F-92408 Courbevoie Cédex(FR)

(72) Inventeur: Bouvy, Bernard
12, rue des Cerisiers
F-69160 Tassin-la-Demi-Lune(FR)
Inventeur: Cavezzan, Jacques, Résidence du Parc Tête d'Or
4, Allée Marcel Achard
F-69100 Villeurbanne(FR)
Inventeur: Frances, Jean-Marc
9, avenue Condorcet
F-69100 Villeurbanne(FR)

(74) Mandataire: Seugnet, Jean Louis et al
RHONE-POULENC CHIMIE Service Brevets Chimie Centre de Recherches des Carrières
B.P. 62
F-69192 Saint-Fons Cédex(FR)

## (54) Composition durcissable, sous un rayonnement, à base de polyorganosiloxane à fonction propanaldéhyde.

(57) La présente invention se rapporte à une composition durcissable par un rayonnement, comprenant au moins un polyorganosiloxane présentant au moins deux motifs siloxy ayant une fonction propanaldéhyde reliée à un atome de silicium.

Utilisation de cette composition pour enduire un substrat et obtenir, après durcissement sous rayonnement de la composition, un article auquel adhère le polyorganosiloxane.

Utilisation telle que celle définie ci-dessus dans laquelle le substrat est du papier et le rayonnement est un rayonnement ultraviolet.

EP 0 402 274 A1

## COMPOSITION DURCISSABLE, SOUS UN RAYONNEMENT, A BASE DE POLYORGANOSILOXANE A FONCTION PROPANALDEHYDE

La présente invention concerne une composition durcissable par un rayonnement et permettant, par dépôt sur un substrat, puis durcissement sur ce substrat, d'obtenir un article ayant des propriétés antiadhérentes vis à vis par exemple de denrées alimentaires ou plus spécialement d'adhésifs acryliques mis au contact de cet article.

La composition selon la présente invention présente l'avantage de pouvoir être utilisée sans solvants.

La composition selon la présente invention présente l'avantage d'être inodore.

Elle présente également l'avantage de durcir très rapidement, dans des temps inférieurs à 0.8 seconde, lorsqu'elle est utilisée en couche mince, c'est-à-dire lorsque le dépôt de la composition sur le substrat correspond sensiblement de 0,1 à 4 g par mètre carré.

La composition selon la présente invention présente également l'avantage de pouvoir être utilisée dans le domaine alimentaire pour enduire des substrats sur lesquels des denrées alimentaires seront obtenues.

Il a maintenant été trouvé et c'est ce qui fait l'objet de la présente invention une composition durcissable par un rayonnement caractérisé en ce qu'elle comprend :
un polyorganosiloxane présentant par molécule au moins trois motifs siloxyle dont au moins deux motifs répondent à la formule générale :

$$\underset{}{X\overset{Ra}{\overset{|}{Si}}O_{\frac{3-a}{2}}} \qquad (1)$$

dans laquelle
- X est choisi parmi les radicaux $-CH_2-CH_2-CHO$ et

$$\overset{CHO}{\overset{|}{-CH}}-CH_3,$$

,
- les radicaux R, identiques ou différents, sont choisis parmi le radical phényle, trifluoro 3,3,3 propyl et un radical alkyle ayant de 1 à 12 atomes de carbone,
- a est choisi parmi zéro, 1 et 2.

Comme exemple des radicaux R on peut citer en tant que radical alkyle, les radicaux méthyle, éthyle, propyle, hexyle et dodécyle. De préférence au moins 50 % en nombre des radicaux R sont des radicaux méthyle.

Le polysiloxane ayant au moins deux motifs de formule (1) a une viscosité comprise généralement entre 10 et 10 000 mPa.s, de préférence comprise entre 300 et 1 000 mPa.s.

Les motifs du polyorganosiloxane, autres que ceux répondant à la formule (1) ont pour formule générale

$$R'-\underset{Ra}{\underset{|}{Si}}O_{\frac{3-a}{2}} \qquad (1')$$

dans laquelle le radical R′, est choisi parmi les radicaux R précédemment définis et le radical vinyle, a étant choisi parmi 0, 1 et 2. De préférence au moins 50 % en nombre de radicaux R′ sont des radicaux méthyle.

Le polysiloxane comprenant au moins deux motifs de formule (1) peut avoir une structure linéaire, cyclique ou ramifiée.

Il doit être entendu que la composition selon la présente invention peut comprendre un mélange de polyorganosiloxanes, comprenant chacun au moins deux motifs siloxyles de formule (1). La composition peut ainsi comprendre, par exemple un polyorganosiloxane linéaire (huile) avec un polyorganosiloxane sous forme de résine.

Ainsi la composition selon la présente invention peut notamment comprendre un polyorganosiloxane

choisi parmi les diorganopolysiloxanes de formule :

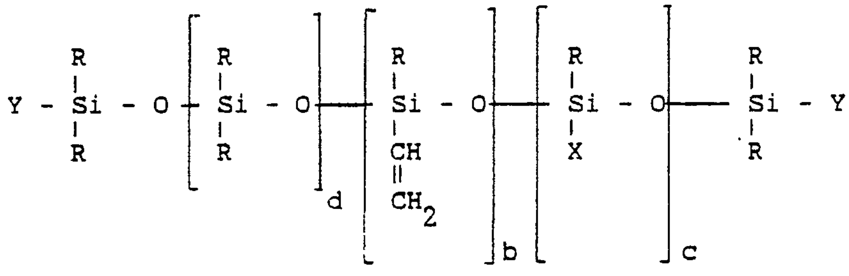

(2)

dans laquelle
- X et R, identiques ou différents, ont la signification donnée dans la formule 1,
- Y, identiques ou différents, sont choisis parmi les radicaux R et X,
- d est un nombre entier compris entre 1 et 2000 inclusivement,
- b est un nombre entier compris entre 0 et 50 inclusivement,
- c est un nombre entier compris entre 0 et 100, avec si c = O, Y = X, et si b et c = 0 alors d égal ou supérieur à 1.

Les polyorganosiloxanes comprenant au moins deux motifs de formule (1) sont préparés à partir de polysiloxanes comprenant dans leur molécule au moins 2 motifs de formule

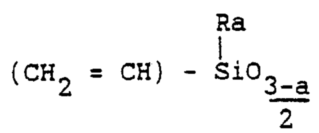

(1')

dans laquelle R et a ont la signification et les valeurs données ci-avant pour les motifs de formule (1).

Pour obtenir les polyorganosiloxanes ayant des motifs de formule (1) on procède à une réaction d'hydroformylation, c'est-à-dire qu'on fait réagir (au moins partiellement) un mélange de CO et d'$H_2$ sur le polyorganosiloxane ayant des motifs (1'), en présence d'un système catalytique approprié et sous pression. Au moins certains motifs de formule (1') se transforment ainsi en motifs de formule (1). Deux procédés de préparation seront décrits dans les exemples ci-après, et les procédés sont décrits de façon plus générale dans les demandes de brevets françaises n° 88.11768 et n° 89.05176, de la Société Rhône-Poulenc, incorporées par référence.

Le rayonnement permettant le durcissement de la composition selon la présente invention est un rayonnement énergétique choisi dans le groupe constitué par :
- les rayonnements actiniques, tels que la lumière ultraviolette, les rayons X et les rayons gamma et
- les rayonnements particulaires tels que les particules alpha et les faisceaux d'électrons.

La lumière ultraviolette est une forme préférée de rayonnement énergétique pour le durcissement des compositions de la présente invention en raison de sa sécurité relative, de son faible coût et de ses faibles exigences en énergie. On préfère également la lumière ultraviolette en raison du fait qu'elle permet d'obtenir des revêtements durcis ayant des niveaux d'adhésion avantageux sur le papier. De plus, on préfère tout particulièrement une lumière ultraviolette comportant une radiation d'une longueur d'onde d'environ 200 à 400 nanomètres, car ce rayonnement provoque le durcissement d'une composition de la présente invention, ayant été appliquée sous forme d'un revêtement sur du papier, en moins de 0,8 seconde, ainsi qu'on l'a indiqué d'une façon détaillée dans les exemples suivants.

Lorsque les compositions selon la présente invention sont durcies par la lumière ultraviolette il est avantageux qu'elles comprennent une quantité efficace d'un (ou plusieurs) photoinitiateur, également appelé parfois photosensibilisateur. Ces matières sont bien connues dans l'art et comprennent par exemple, l'acétophénone, la propiophénone, la benzophénone, la xanthone, la fluorénone, le benzaldéhyde, l'anthraquinone, la triphénylamine, le carbazole, la 3-méthylacétophénone, la 4-méthylacétophénone, la 3-pentylacétophénone, la 4-méthoxyacétophénone, la 3-bromoacétophénone, la 4-allylacétophénone, le p-diacétylbenzène, la 3-méthoxybenzophénone, la 4-méthylbenzophénone, la 4-chlorobenzophénone, la 4,4'-diméthoxybenzophénone, la 4-chloro-4'-benzylbenzophénone, la 3-chloroxanthone, la 3,9-dichloroxanthone, la 3-chloro-8-nonylxanthone, l'hydroxy-2 méthyl-2 phényl-1 propanone, l'hydroxy-1 cyclohexylphénylcétone, etc. La quantité de cette matière (photoinitiateur) doit être seulement suffisante pour photosensibiliser le

système et, d'ordinaire, elle sera comprise entre 0,01 et 20 pour cent en poids, de préférence entre 0,3 et 10 pour cent en poids, par rapport au polyorganosiloxane comprenant des motifs de formule (1).

Les compositions selon la présente invention peuvent éventuellement comprendre des charges, telles que par exemple de la silice, des pigments ou colorants, en quantité telle qu'elles n'empêchent pas le durcissement de la composition par le rayonnement utilisé.

La demanderesse a par ailleurs constaté qu'il est avantageux, notamment pour un durcissement par la lumière ultraviolette, que la composition selon la présente invention comprenne un polyorganosi loxane ayant des motifs de formule (1) avec des motifs de formule (1') comprenant au moins 1, de préférence au moins 2, motif de formule :

$$CH_2=CH-\underset{Ra}{\underset{|}{Si}}O_{\frac{3-a}{2}}$$

la signification de R, identiques ou différents, ayant été précisée ci-avant et la valeur de a étant égale à 0,à 1 ou à 2.

Dans la mesure où la composition selon la présente invention comprend un polyorganosiloxane ayant au moins deux motifs répondant à la formule (1), mais dont les autres motifs siloxyles ne comprennent pas, ou moins de 1, motif siloxyle de formule :

$$CH_2=CH-\underset{Ra}{\underset{|}{Si}}O_{\frac{3-a}{2}}$$

ci-dessus, il est avantageux que cette composition comprenne en plus un polyorganosiloxane comprenant par molécule au moins 1 motif de formule :

$$\overset{R^1}{\overset{|}{HC}}=\overset{R^2}{\overset{|}{C}}-\left[COO\right]_n-\left[R^3\right]_p-\overset{R^4{}_e}{\overset{|}{Si}}O_{\frac{3-e}{2}} \qquad (3)$$

dans laquelle :

- $R^1$ est choisi parmi l'atome d'hydrogène, un radical alkyle en $C_1$ à $C_4$, un radical phényle, un radical cyclohexyle,
- $R^2$ est choisi parmi l'atome d'hydrogène et le groupement méthyle,
- $R^3$ est un groupement alcoylène en $C_1$ à $C_{12}$, éventuellement ramifié ou substitué par un atome d'halogène,
- $R^4$, identiques ou différents, représentent un groupement alkyle en $C_1$ à $C_{12}$, éventuellement ramifié ou halogéné, phényle, cyclohexyle, alcoxy en $C_1$ à $C_6$,
- n = 0 ou 1,
- p = 0 ou 1,
- e = 0, ou 1, ou 2.

Ainsi la composition selon la présente invention peut notamment comprendre en plus un α-ω bis-diméthylvinylsiloxypolydiorganosiloxane, lorsque dans la formule (3) n et p = 0 et lorsque $R^1$ et $R^2$ representent un atome d'hydrogène. Il est intéressant de noter, qu'une composition ne contenant que l'α-ω bis-diméthylvinylsiloxypolydiorganosiloxane avec un photoinitiateur ne réticule pas sous UV comme celà sera montré plus loin dans l'exemple.

Ainsi la composition selon la présente invention peut comprendre, en plus du polyorganosiloxane ayant deux motifs de formule (1), un siloxane acrylique de formule :

$$\begin{array}{l} \;\;R_1\;\;\;R_2 \qquad\qquad\qquad\quad R^4{}_e \\ \;\;|\;\;\;\;\;\;| \qquad\qquad\qquad\qquad\;\; | \\ HC = C - COO - R^3 - SiO_{\frac{3-e}{2}} \end{array}$$

lorsque dans la formule (3) n et p = 1. De tels produits sont décrits par exemple dans le brevet français 2 110 115. On doit noter cependant que, dans ce brevet, les produits utilisés sont dans une composition avec solvant.

Les compositions de la présente invention sont utiles en tant que revêtements anti-adhérence durcissables au moyen d'un rayonnement, additifs pour peintures, revêtements d'enroulements électriques, pour le traitement de matières textiles, comme revêtements hydrofuges, dans des encres, etc...

On peut appliquer et durcir les compositions de la présente invention sur tout substrat solide approprié, tel que des matières cellulosiques comme le papier et le bois ; des métaux comme l'aluminium, le fer et l'acier ; des matières plastiques comme des pellicules ou feuilles de polyéthylène ou de polypropylène ; des pellicules de polyéthylène ou de polypropylène sur d'autres surfaces, par exemple sur du papier, des polyamides telles que le nylon ; et des matières siliceuses comme les matières céramiques, le verre et le béton.

Les compositions de la présente invention sont particulièrement utiles en tant que revêtements anti-adhérence sur du papier ou du papier revêtu de matière plastique. On peut appliquer les compositions en une couche mince à la surface du papier de façon à obtenir un revêtement ayant un poids d'environ un gramme par mètre carré de papier revêtu. A l'état durci, ces revêtements minces permettent l'enlèvement d'adhésifs acryliques agressifs sous l'effet d'une force ne dépassant pas environ 38,61 g/cm. Il va de soi que l'on peut également appliquer les revêtements en des couches plus minces ou plus épaisses pourvu que le durcissement au moyen d'un rayonnement du revêtement ne soit pas gêné. Dans le domaine des revêtements anti-adhérence sur papier, la quantité de revêtement anti-adhérence est généralement comprise entre environ 0,1 et 2,0 grammes par mètre carré.

Suivant le procédé de la présente invention, on applique les compositions de la présente invention à un substrat par tous moyens convenables, par exemple à la brosse, par immersion, par pulvérisation, au rouleau, et par étalement. On peut effectuer l'application des compositions à du papier au moyen de l'une quelconque des méthodes appropriées bien connues dans le domaine du revêtement du papier, par exemple à l'aide d'un dispositif de revêtement à lame traînante, d'un couteau d'air, de cylindres enducteurs de rouleaux de photogravure, par impression ou par n'importe quel autre moyen.

On durcit la composition appliquée de la présente invention par exposition de celle-ci à un rayonnement énergétique tel que ceux décrits ci-avant, pendant une durée suffisante pour durcir la composition exposée et faire adhérer la composition exposée au substrat. On détermine l'état durci de la composition au moyen de l'essai au ruban adhésif TESA (marque de fabrique déposée par la Société) décrit ci-dessous dans les exemples. Pour être efficaces en tant que revêtement anti-adhérence sur un substrat solide, les compositions durcies appliquées de la présente invention doivent adhérer au substrat avec une force adhésive qui est supérieure à la force adhésive existant entre la composition durcie et l'adhésif à enlever.

Les exemples ci-après illustrent des modes de préparation et d'utilisation de compositions selon la présente invention.

## EXEMPLE 1 :

Préparation d'une huile de formule moyenne $\alpha$ diméthylpropanalsiloxy $\omega$ diméthylvinylsiloxy polydiméthylsiloxy polyméthylvinylsiloxy - polyméthylpropanalsiloxane.

### Préparation du système catalytique :

On commence par préparer un ligand de formule

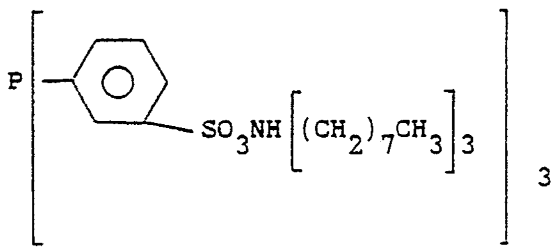

Pour cela on mélange sous agitation et sous atmosphère d'argon 5,9 g de triphénylphosphine trisulfonée en position méta titrant 9.26 meq (milliéquivalent) de P(III), avec 20 g d'eau et 1.4 g d'$H_2SO_4$ titrant 28.6 meq $H^+$.

On maintient sous agitation magnétique 30 minutes, puis on ajoute 33 g de toluène et 9.8 g de tris-n-octylamine.

On maintient le mélange sous agitation vigoureuse durant 60 mn à température ambiante (20 °C) et sous argon et on laisse décanter la phase organique supérieure (42 g) et la phase aqueuse (23 g).

La phase organique est conservée ; elle titre 4.63 meq P(III) et elle comporte 27 meg de tris-n-octylamine fixée ou non au ligand et 29.8 g de toluène.

Le titre en phosphore est déterminé par iodométrie.

Le système catalytique est préparé par simple mélange du complexe dinucléaire du rhodium de formule $[Rh(\mu\text{-StBu})(CO)_2]_2$ qui est le di($\mu$-sulphotertiobutyle)tétracarbonyledirhodium dont le procédé de préparation est décrit dans J. Organomet. Chem., 73, C36, 1974 avec le ligand obtenu.

L'huile polyorganosiloxane à groupements diméthyl propanalsiloxy est préparé en introduisant dans un autoclave en acier inoxydable de 1 000 $cm^3$, muni d'un système de chauffage :

- un système catalytique tel que défini ci-avant, renfermant 0,579 meq de P(III) et 0,00006 atg de rhodium,
- une huile de formule

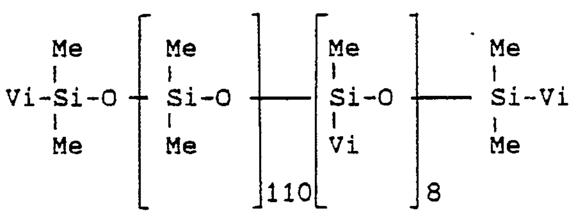

383.1 g ⟶ 0.425 eq Vi

- et 97 g de toluène.

L'autoclave est rempli d'azote et on introduit à température comprise entre 100 et 110 °C un mélange $H_2/CO$ (rapport molaire 1/1) à une pression constante de 23 bars.

Un système de capteurs de pression permet de suivre la consommation de gaz $H_2/CO$ dans une réserve de 500 $cm^3$ mise en pression à 100 bars avant la réaction.

On arrête la réaction après une consommation calculée de $H_2/CO$ correspondant à un taux de transformation TT (en %) des groupes vinyles introduits de 50 %, en isolant l'autoclave du système d'introduction et en ref roidissant brusquement l'autoclave. La durée de réaction est de 44 minutes. L'autoclave isolé est purgé au moyen d'un système d'évacuation des gaz. Le mélange réactionnel obtenu est traité par 200 g d'eau renfermant 0.28 g de NaOH dans un ballon de 1 litre pendant 60 minutes à 20 °C sous agitation et argon. L'émulsion obtenue est séparée par centrifugation durant 20 minutes à 7000 t/mn. La phase organique supérieure est limpide et incolore. La phase aqueuse contenant le rhodium s'est teintée de jaune. On évapore le toluène de la phase organique pour isoler l'huile silicone qui est ensuite analysée par R.M.N. $^1H$ et $^{29}Si$.

A partir des spectres obtenus on détermine une structure d'huile moyenne.

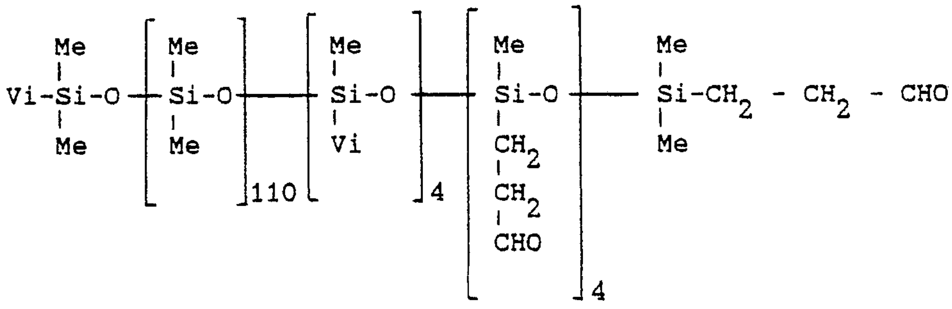

EXEMPLE 2 :

Préparation d'une huile α-ω triméthylsiloxypolydiméthylsiloxyméthylpropanalsiloxane.

Dans un autoclave en acier inoxydable d'un litre on introduit :
- 488 g (soit 0,054 Eq/Vi) d'une huile de formule moyenne

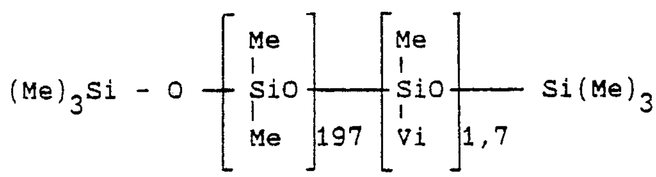

dans laquelle Me signifie méthyle et Vi signifie vinyle,
- 584 mg d'une solution de $Rh_2$(éthyl 2-hexanoate)$_4$ dans du tétraméthyltétravinyl-cyclotétrasiloxane, la dite solution contenant 0,88 % en poids de rhodium. La solution est obtenue par chauffage préalable à 110° C pendant 5 minutes
- 0,25 g de $P(C_4H_9)_3$ soit 1,23 x $10^{-3}$ atg de phosphore.

Le rapport atg P/atg Rh est de 25, tandis que le rapport Eq.Vi/atg Rh est de 1080.

On purge le réacteur à l'azote, on chauffe sous agitation et atmosphère d'azote le mélange à 104° C, puis on introduit, à l'aide d'une réserve de 500 cm³ en pression à 99 bars de mélange $H_2$ + CO Où $H_2$/CO = 1, le mélange gazeux $H_2$ + CO de façon à atteindre une pression constante de 30 bars dans l'autoclave.

La réaction débute aussitôt et on peut suivre la consommation du mélange gazeux à l'intérieur de la réserve grâce à un système de mesure de pression.

La pression du mélange $H_2$/CO est maintenue à 30 bars et la température à 105° C pendant toute la durée de la réaction soit 22 mn. La consommation du mélange $H_2$/CO correspond à une diminution de pression dans la réserve de 6.4 bars.

Après ref roidissement de la masse réactionnelle à la température ambiante (23° C) et purge du réacteur à l'azote on soutire une huile de formule moyenne

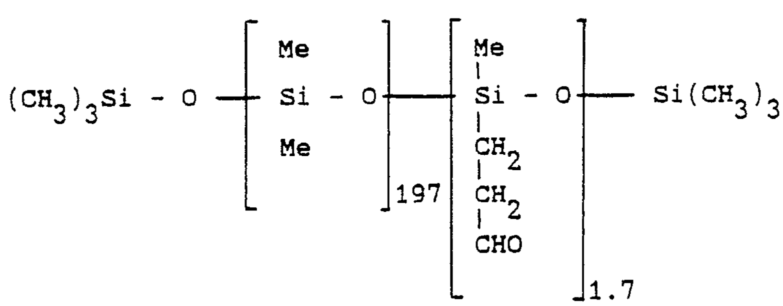

transparente et incolore.

EXEMPLE 3

Préparation d'une huile α - ω triméthylsiloxy polydiméthylsiloxy, méthylvinylsiloxy, méthylpropanalsiloxane.

Dans un autoclave en acier inoxydable d'un litre on introduit successivement sous azote :
- 394,8 g (soit 0,532 EqVi) d'une huile de formule moyenne

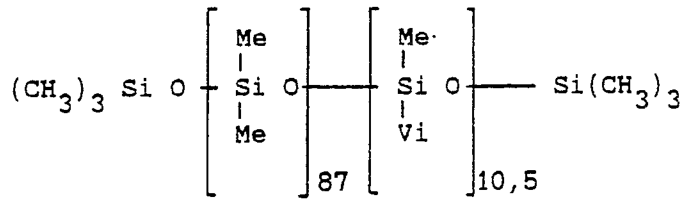

- 114,69 mg d'une solution de $Rh_2$ (éthyl2 hexanoate)$_4$ dans du tétraméthyltétravinylcyclotétrasiloxane, ladite solution contenant 1,72 % en poids de rhodium, soit 1,97 mg de rhodium, c'est-à-dire 0,0000192 atg de rhodium,
- 0.148 g de $P(C_4H_9)_3$, soit 7,326 x $10^{-4}$ atg de phosphore.

Le rapport atg de P/atg de Rh est de 38, et le rapport EqVi/atg de Rh est de 27708.

On chauffe sous agitation et atmosphère d'argon le mélange à 115 °C puis on introduit à l'aide d'une réserve de 500 $cm^3$ en pression de 100 bars de mélange $H_2$ + CO où $H_2$/CO = 1, le gaz de synthèse $H_2$/CO de façon à atteindre une pression constante de 50 bars dans l'autoclave.

La réaction débute aussitôt, et on peut suivre la consommation du mélange gazeux à l'intérieur de la réserve grâce à un système de mesure de pression.

La pression du mélange $H_2$/CO est maintenue à 50 bars et la température à 115 °C pendant toute la durée de la réaction soit 2h 30 mn.

On soutire une huile, transparente et incolore, de formule moyenne

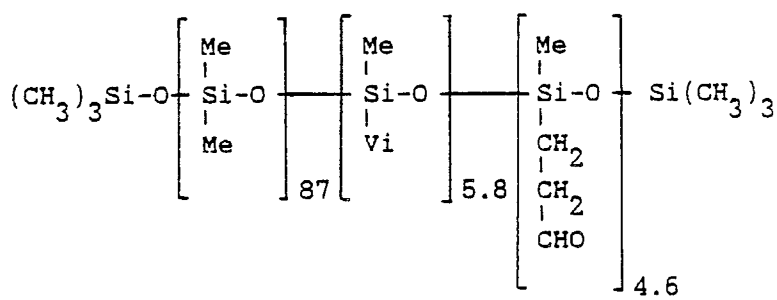

Le résultat de l'étude spectroscopique est le suivant :

R.M.N.$^1$H

$Si-CH_2$ - : 0.77 ppm/TMS

$Si-CH_2-CH_2$- : 2.43 ppm/TMS

$Si-CH_2-CH_2-CHO$ : 9.74 ppm/TMS

$Si(CH_3)$-CH- : 1.18 ppm/TMS

$Si(CH_3)$-CH-CHO : 9.94 ppm/TMS

R.M.N $^{29}$Si

$Si(CH_3)_3$ : 7.4 ppm/TMS 1 %

$(CH_3)ViSiO_{2/2}$ : -35.5 ppm/TMS 5.8 %

$(CH_3)_2SiO_{2/2}$

et

$(CH_3)$(Propanal)$SiO_2$ : -21.6 à -30.6 ppm/TMS 93.2 %

ppm étant la valeur du déplacement chimique exprimée en partie par million par rapport à une référence, dans le cas présent par rapport au TMS, c'est-à-dire par rapport au tétraméthylsilane.

EXEMPLE 4

Préparation d'un α - ω triméthylsiloxy polydiméthylsiloxy, méthylpropanalsiloxane.

Dans un autoclave en acier inoxydable de 1 litre on introduit successivement :
- 340 g (soit 0,458 Eq.Vi) d'une huile de formule moyenne

$$(CH_3)_3\,Si\,O\left[\begin{matrix}Me\\ |\\ Si-\,O\\ |\\ Me\end{matrix}\right]_{87}\left[\begin{matrix}Me\\ |\\ Si\;O\\ |\\ Vi\end{matrix}\right]_{10,5}Si(CH_3)_3$$

- 139,4 mg d'une solution de $Rh_2$ (éthyl2 hexanoate)$_4$ dans du tétraméthyltétravinylcyclotétrasiloxane, ladite solution contenant, en poids, 1,72 % de Rh, soit 2,397 mg de rhodium c'est-à-dire 0,0000233 atg de rhodium.
- 0,2 g de $P(C_4H_9)_3$, soit 0,001 atg de phosphore.

Le rapport atg de P/atg de Rh est de 43 et le rapport EqVi/atg de Rh est de 19656.

On chauffe sous agitation et atmosphère d'argon le mélange à 104° C puis on introduit à l'aide d'une réserve de 500 cm$^3$ en pression de 107 bars de mélange $H_2$ + CO où $H_2$ CO = 1, le gaz de synthèse $H_2$ CO de façon à atteindre une pression constante de 30 bars dans l'autoclave.

La réaction débute aussitôt, et on peut suivre la consommation du mélange gazeux à l'intérieur de la réserve grâce à un système de mesure de pression.

La pression du mélange $H_2$/CO est maintenue à 30 bars et la température à 105° C pendant toute la durée de la réaction soit 50 mn. La consommation du mélange $H_2$/CO correspond à une diminution de pression dans la réserve de 43 bars.

On soutire une huile, transparente et incolore, de formule moyenne

$$(CH_3)_3Si-O\left[\begin{matrix}Me\\ |\\ Si-O\\ |\\ Me\end{matrix}\right]_{87}\left[\begin{matrix}Me\\ |\\ Si-O\\ |\\ CH_2\\ |\\ CH_2\\ |\\ CHO\end{matrix}\right]_{10.5}Si(CH_3)_3$$

Le résultat de l'étude spectroscopique est le suivant

R.M.N.$^1$H

$Si-CH_2-$ : 0.77 ppm/TMS

$Si-CH_2-CH_2-$ : 2.43 ppm/TMS

$Si-CH_2-CH_2-CHO$ : 9.74 ppm/TMS 3.5 % molaire

$Si(CH_3)-CH-$ : 1.18 ppm/TMS

$Si(CH_3)-CH-CHO$ : 9.94 ppm/TMS 2 % molaire

R.M.N $^{29}$Si

$Si(CH_3)_3$ : 7.4 ppm/TMS 2 %

$(CH_3)_2SiO_{2/2}$

et

$(CH_3)(Propanal)SiO_2$ : -21.6 à -30.6 ppm/TMS 98 %

EXEMPLE 5

Utilisation des polysiloxanes préparés dans les exemples 1 à 4 pour l'obtention d'élastomères en couches minces sur papier, après exposition de la composition déposée, au rayonnement ultraviolet.

Un bain de traitement est préparé en ajoutant à 100 parties en poids d'une huile polyorganosiloxane à fonction propanal selon l'un des exemples 1 à 4, 3 à 5 parties (en poids) d'un photoinitiateur constitué de:

A - hydroxy-2 méthyl-2'phényl-1 propanone (vendue sous la marque DAROCUR 1173 par la société MERCK) ou

B - d'un mélange de benzophénone et d'hydroxy-1 cyclohexylphényl cétone/vendu par la société CIBA-GEIGY sous la marque IRGACURE 500).

Les lettres A et B désigneront ces photoinitiateurs dans le tableau n° 1 dont il sera question ci-après.

On agite vigoureusement à température ambiante le mélange polyorganosiloxane + photoinitiateur pendant 10 minutes et on dépose ensuite la composition obtenue, sans utiliser de solvant, sur du papier "glassine" (référence AV 100 de la société KAMERER) au moyen d'une barre de MAYER n° 0 ; le dépôt correspond à 2,5 g de composition pour 1m$^2$ de papier glossine.

On fait alors passer ce papier enduit sous une lampe UV, de technologie FUSION SYSTEM, caractérisée par :

- une absence d'électrode,
- une excitation par micro-ondes.

Après passage sous la lampe UV, la couche de la composition silicone est durcie et on mesure le temps d'irradiation. La lampe UV a une puissance de 120 W/cm.

La quantité du revêtement silicone obtenu (sur le papier glossine) est ensuite évaluée par la mesure des propriétés anti-adhérentes de la couche silicone durcie. Pour cela on met au contact de la couche de silicone durcie, à 20° C, pendant 20 heures, un ruban adhésif (TESA 4651) et à 70° C, pendant 20 heures, un ruban adhésif (TESA 4970).

On mesure la force minimale pour détacher le ruban adhésif considéré (TESA) de la couche durcie sur le papier glassine, suivant la norme européenne FTM n° 3. Cette force est exprimée en gramme par cm.

D'autre part la mesure de l'adhésion subséquente représente le niveau de polymérisation de la couche silicone (CA = 100 % représente une bonne polymèrisation). Cette mesure est faite selon la norme européenne FTM n° 11 (FINAT TEST METHOD).

Les résultats obtenus figurent dans le tableau n° 1 suivant l'exemple 5.

EXEMPLE 6 :

On procède de la même façon qu'à l'exemple 5, à la seule différence qu'on utilise le produit obtenu selon l'exemple 4, associé à une huile polydiméthylsiloxane à terminaisons diméthylvinylsiloxy, ayant une viscosité de 20 mPa.s à 25° C, dans un rapport pondéral 50/50.

On constate (voir tableau n° 1) alors une amélioration des propriétés anti-adhérentes par rapport aux résultats de la composition de l'exemple 4 seule.

A titre indicatif, en opérant selon les mêmes conditions que celles décrites à l'exemple 5, mais en utilisant seulement une huile polydiméthylsiloxane à terminaisons diméthylvinylsiloxy ayant une viscosité de 20 mPa.s à 25° C, on constate que le produit ne polymèrise pas sous UV, même après une durée d'irradiation de 5 secondes.

TABLEAU 1

| Produit préparé selon | Photoinitiateur (%) | Temps de polymérisation (secondes) | Anti-adhérence | | |
|---|---|---|---|---|---|
| | | | à 20 °C en g/cm | à 70 °C en g/cm | CA (%) |
| exemple 1 | A (3 %) | 0,5 | 10 | 12 | 100 |
| exemple 2 | A (3 %) | 2 | - | - | - |
| exemple 3 | B (5 %) | 0,2 | 6 | 14 | 80 |
| exemple 4 | B (5 %) | 0,4 | 15 | 28 | 75 |
| exemple 6 | A (3 %) | 0,4 | 5 | 20 | 90 |
| A : hydroxy-2, méthyl-2, phényl-1 propanone, | | | | | |
| B : benzophénone + hydroxy-1 cyclohexyl-phénylcétone | | | | | |

EXEMPLE 7 :

On procède de la même manière qu'à l'exmple 5, à la différence que la composition ne comprend pas de photoinitiateur, est étalée à raison de 3 g par mètre carré de papier glassine et est durcie sous l'action de faisceaux d'électrons.

L'appareil utilisé est un appareil de la société ESI (Energy Sciences Industry) référence ESI CB 175/15/10L

- tension : 160 KV
- courant : 1,5 à 6 mA
- vide ≃ : 100-200 ppm.

Après chaque essai, on mesure la dose de radiation (en mégarads) et les propriétés anti-adhérentes des revêtements silicones obtenus (voir tableau 2).

TABLEAU 2

| Produit préparé selon | dose en Mrad | anti-adhérence | | |
|---|---|---|---|---|
| | | à 20 °C en g/cm | à 70 °C en g.cm | CA |
| exemple 3 | 12 | 3 | 14 | 100 |
| exemple 4 | 20 | 12 | 35 | 100 |

**Revendications**

1. - Composition durcissable par un rayonnement caractérisée en ce qu'elle comprend : un polyorganosiloxane présentant par molécule au moins trois motifs siloxyle dont au moins deux motifs répondent à la formule générale :

$$\mathrm{X}\overset{\mathrm{R_a}}{\overset{|}{\mathrm{Si}}}\mathrm{O}_{\frac{3-a}{2}} \qquad (1)$$

dans laquelle
- X est choisi parmi les radicaux $-CH_2-CH_2-CHO$ et

$$-\overset{\mathrm{CHO}}{\overset{|}{\mathrm{CH}}}-\mathrm{CH_3},$$

- les radicaux R, identiques ou différents, sont choisis parmi le radical phényle, trifluoro 3,3,3 propyl et un radical alkyle ayant de 1 à 12 atomes de carbone,
- a est choisi parmi zéro, 1 et 2.

2. - Composition durcissable par un rayonnement selon la revendication 1, caractérisée en ce que les motifs du polyorganosiloxane, autres que ceux répondant à la formule (1) ont pour formule générale

$$\mathrm{R'}\,\underset{\underset{\mathrm{R_a}}{|}}{\mathrm{Si}}\mathrm{O}_{\frac{3-a}{2}} \qquad (1')$$

dans laquelle la signification de R, identiques ou différents a été précisée dans la formule (1), dans laquelle le radical R', est choisi parmi les radicaux R précédemment définis et le radical vinyl, a étant choisi parmi zéro, 1 et 2.

3. - Composition, selon la revendication 1, durcissable par un rayonnement, caractérisé en ce qu'elle comprend un polyorganosiloxane choisi parmi les diorganopolysiloxanes de formule

$$\mathrm{Y}-\underset{\underset{\mathrm{R}}{|}}{\overset{\overset{\mathrm{R}}{|}}{\mathrm{Si}}}-\mathrm{O}\left[\underset{\underset{\mathrm{R}}{|}}{\overset{\overset{\mathrm{R}}{|}}{\mathrm{Si}}}-\mathrm{O}\right]_d\left[\underset{\underset{\mathrm{CH_2}}{\overset{\|}{\mathrm{CH}}}}{\overset{\overset{\mathrm{R}}{|}}{\mathrm{Si}}}-\mathrm{O}\right]_b\left[\underset{\underset{\mathrm{X}}{|}}{\overset{\overset{\mathrm{R}}{|}}{\mathrm{Si}}}-\mathrm{O}\right]_c\underset{\underset{\mathrm{R}}{|}}{\overset{\overset{\mathrm{R}}{|}}{\mathrm{Si}}}-\mathrm{Y} \qquad (2)$$

dans laquelle :
- X et R, identiques ou différents, ont la signification donnée à la revendication 1,
- Y, identiques ou différents, sont choisis parmi les radicaux R et X,
- d est un nombre entier compris entre 1 et 2000 inclusivement,
- b est un nombre entier compris entre 0 et 50 inclusivement,
- c est un nombre entier compris entre 0 et 100, avec si c = 0, Y = X, et si b et c = 0, alors d égal ou supérieur à 1.

4. - Composition selon l'une quelconque des revendications précédentes caractérisée en ce qu'elle comprend en plus un polyorganosiloxane comprenant par molécule au moins 1 motif de formule

$$\overset{\overset{\mathrm{R^1}}{|}}{\mathrm{HC}}=\overset{\overset{\mathrm{R^2}}{|}}{\mathrm{C}}-\left(\mathrm{COO}\right)_n-\left(\mathrm{R^3}\right)_p-\overset{\overset{\mathrm{R^4_e}}{|}}{\mathrm{Si}}\mathrm{O}_{\frac{3-e}{2}} \qquad (3)$$

dans laquelle :
R[1] est choisi parmi l'atome d'hydrogène, un radical alkyle en C1 à C4, un radical phényle, un radical cyclohexyle,
$R^2$ st choisi parmi l'atome d'hydrogène et le groupement méthyle,
- $R^3$ est un groupement alcoylène en C1 à C12, éventuellement ramifié ou substitué par un atome d'halogène,
- $R^4$, identiques ou différents, représentent un groupement alkyle en C1 à C12, éventuellement ramifié et halogéné, phényle, cylcohexyle, alcoxy en C1 à C6,
- n = 0 ou 1,
- p = 0 ou 1,
- e = 0, ou 1, ou 2.

5. - Composition selon l'une quelconque des revendications précédentes caractérisée en ce qu'elle comprend un polysiloxane ayant au moins 1 motif de formule (3) lorsque le polysiloxane ayant au moins deux motifs de formule (1) ne comprend pas ou comprend moins d'un groupement u $Si\text{-}CH=CH_2$ dans sa molécule.

6. - Composition selon l'une quelconque des revendications 4 ou 5 caractérisée en ce qu'elle comprend un polysiloxane ayant au moins un motif de formule (3) correspondant à

$$H_2C = CH - \underset{}{\overset{R^4_e}{\overset{|}{Si}}}O_{\frac{3-e}{2}}$$

dans laquelle $R^4$ a la signification mentionnée ci-avant et a la valeur précisée ci-avant.

7. - Composition selon l'une quelconque des revendications précédentes, réticulable sous UV, caractérisée en ce qu'elle renferme en outre une quantité efficace d'au moins un photinitiateur.

8. - Utilisation de la composition selon l'une quelconque des revendications précédentes pour le traitement d'un substrat solide pour faciliter l'enlèvement ou le décollage notamment de matières adhésives à partir de celui-ci, dans laquelle :
- on applique au substrat solide une couche de la composition selon l'une quelconque des revendications précédentes,
- on expose la couche déposée sur le substrat à un rayonnement,
- on récupère un article comprenant le substrat solide auquel adhère un polydiorganosiloxane durci permettant un enlèvement aisé, notamment d'adhésifs acryliques agressifs, à partir de celui-ci.

9. - Utilisation de la composition selon la revendication 7, dans laquelle on suit le mode opératoire selon la revendication 8, le rayonnement étant un rayonnement UV.

10. - Utilisation de la composition selon l'une quelconque des revendications 1 à 7, dans laquelle on utilise le mode opératoire des revendications 8 ou 9 et dans laquelle le substrat est du papier.

11. - Article obtenu en utilisant, selon les revendications 8 à 10, une composition selon les revendications 1 à 7, sur un substrat.

Office européen des brevets

# RAPPORT DE RECHERCHE EUROPEENNE

Numero de la demande

EP 90 42 0238

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| | Néant.<br>----- | | C 08 L 83/06<br>C 08 L 83/07<br>C 09 D 183/06 |
| | | | **DOMAINES TECHNIQUES RECHERCHES (Int. Cl.5)** |
| | | | C 09 D<br>C 08 L |

Le présent rapport a été établi pour toutes les revendications

| Lieu de la recherche | Date d'achèvement de la recherche | Examinateur |
|---|---|---|
| LA HAYE | 10-09-1990 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)